# EUROPÄISCHE PATENTSCHRIFT

(11) **EP 0 986 489 B1**
(45) Veröffentlichungstag und Bekanntmachung des Hinweises auf die Patenterteilung: **23.04.2008**
(21) Anmeldenummer: 99906051.0
(22) Anmeldetag: 14.01.1999
(51) Int. Cl.: B60H 1/00, F16F 15/08, F04D 29/66, H02K 5/24

(54) **ENTKOPPLUNGSVORRICHTUNG FÜR EINEN ELEKTROMOTOR**
DECOUPLING DEVICE FOR AN ELECTRIC MOTOR
DISPOSITIF DE DECOUPLAGE POUR MOTEUR ELECTRIQUE

(30) Priorität: 28.03.1998 DE 19813984
(43) Veröffentlichungstag der Anmeldung: 22.03.2000
(73) Patentinhaber: ROBERT BOSCH GMBH, 70442 Stuttgart (DE)
(72) Erfinder: RUPP, Bernhard, D-75056 Sulzfeld (DE); KNÖPFEL, Gerd, D-77815 Bühl (DE); BRASS, Otto, D-77815 Bühl (DE); ZINK, Gerhard, D-77815 Bühl (DE)
(86) Internationale Anmeldenummer: PCT/DE1999/000067
(87) Internationale Veröffentlichungsnummer: WO 1999/050082

(56) Entgegenhaltungen:
- EP-A- 0 596 837
- US-A- 1 574 985
- US-A- 2 368 727
- US-A- 4 946 351
- PATENT ABSTRACTS OF JAPAN vol. 010, no. 222 (M-504), 2. August 1986 & JP 61 059039 A (NATL TIRE KK;OTHERS: 01), 26. März 1986

## Beschreibung

### Stand der Technik

Die Erfindung geht aus von einer Entkopplungsvorrichtung nach der Gattung des Patentanspruchs 1.

Es ist schon eine Entkopplungsvorrichtung bekannt (DE 42 40 776 C1), bei der zwar die Entkopplung zwischen Elektromotor und Gebläsegehäuse über elastische Entkopplungselemente erfolgt, jedoch ist diese Entkopplung noch relativ starr, so dass die Laufgeräusche des Elektromotors und laufbedingte Schwingungen des Gebläses, z. B. durch Unwucht des Gebläserades, auf das Gebläsegehäuse noch in hohem Maße übertragen werden und zu einer unerwünschten Lärmentwicklung führen.

Weiterhin ist aus der gattungsbildenden US 2 368 727 A eine Entkopplungsvorrichtung für ein empfindliches optisches System, insbesondere ein Kamerasystem, in einem Flugzeug mit einem überwiegend viereckig ausgebildeten Halter bekannt, bei dem die Entkopplungsstellen an zwei gegenüberliegenden Seiten jeweils aus paarweise nebeneinander angeordneten Entkopplungselementen bestehen.

### Vorteile der Erfindung

Die erfindungsgemäße Entkopplungsvorrichtung mit den kennzeichnenden Merkmalen des Patentanspruchs 1 hat demgegenüber den Vorteil, dass sie auf einfache Art und Weise die Geräuschabkopplung des Elektromotors gegenüber dem Gehäuse verbessert. Da in Umfangsrichtung des Motorhalters wenigstens ein Paar erste Entkopplungsstellen und ein Paar zweite Entkopplungsstellen derart vorgesehen sind, dass sich erste und zweite Entkopplungsstellen mit gleichem Abstand zueinander abwechseln, ergibt sich darüber hinaus der besondere Vorteil, dass an den Entkopplungsstellen angeordnete Entkopplungselemente ausschließlich auf Druck und Schub beansprucht werden und daher eine axiale Befestigung durch beispielsweise Kleben oder Vulkanisieren der Entkopplungselemente entfallen kann, wodurch die Dauerschüttelfestigkeit verbessert wird.

Durch die in den abhängigen Patentansprüchen aufgeführten Maßnahmen sind vorteilhafte Weiterbildungen und Verbesserungen der in dem Patentanspruch 1 angegebenen Entkopplungsvorrichtung möglich.

Die Ausbildung der Entkopplungselemente als Entkopplungshülsen ermöglicht eine besonders wirkungsvolle Schwingungsabkopplung.

Besonders vorteilhaft ist es, bei einer ersten Entkopplungsstelle an dem Motorhalter einen umlaufenden Halterkragen auszubilden, der an der ersten Anlagestelle in das Durchgangsloch der Entkopplungshülse ragt sowie an dessen Innenwandung anliegt und an dem Gehäuse einen umlaufenden Gehäusekragen auszubilden, der an der zweiten Anlagestelle in das Durchgangsloch der Entkopplungshülse ragt sowie an dessen Innenwandung anliegt. Besonders vorteilhaft ist es ebenfalls, bei einer zweiten Entkopplungsstelle an dem Motorhalter einen umlaufenden Halterkragen auszubilden, der an der ersten Anlagestelle in das Durchgangsloch der Entkopplungshülse ragt sowie an dessen Innenwandung anliegt und ein Halteelement vorzusehen, an dem eine Abstandshülse und ein umlaufender Elementenkragen ausgebildet sind, der an der zweiten Anlagestelle in das Durchgangsloch der Entkopplungshülse ragt sowie an dessen Innenwandung anliegt, wobei die Abstandshülse das Durchgangsloch und den Halterkragen mit radialem Abstand durchragt und an dem Gehäuse anliegend mittels einer Schraubenverbindung gehalten wird.

Vorteilhaft ist es auch, an dem Motorhalter einen umlaufenden Halterkragen auszubilden, der an der ersten Anlagestelle in das Durchgangsloch der Entkopplungshülse ragt sowie an dessen Innenwandung anliegt und an dem Gehäuse einen umlaufenden Gehäusekragen auszubilden, der an der zweiten Anlagestelle in das Durchgangsloch der Entkopplungshülse ragt und ausgehend von dem Motorhalter einen ersten an der Innenwandung des Durchgangsloches anliegenden Kragenabschnitt, einen zweiten sich verjüngenden Kragenabschnitt und einen dritten zylindrischen Kragenabschnitt vorzusehen, der mit radialem Abstand in ein Kragenloch des Halterkragens ragt. Hierdurch kann die radiale Beweglichkeit der Entkopplungshülsen durch Anschläge begrenzt und die radiale Steifigkeit der Entkopplungshülsen in Abhängigkeit von der radialen Auslenkung beeinflußt werden.

Ebenfalls vorteilhaft ist es, an dem Motorhalter einen umlaufenden Halterkragen auszubilden, der an der ersten Anlagestelle in das Durchgangsloch der Entkopplungshülse ragt sowie an dessen Innenwandung anliegt und das Gehäuse mit einem Gehäuseloch zu versehen, in das die Entkopplungshülse an der zweiten Anlagestelle mit einer Hülsennut eingreift. Dazu ist es zusätzlich vorteilhaft, an der Entkopplungshülse anschließend an die zweite Anlagestelle einen Abstimmungsabschnitt auszubilden, auf dessen Ende ein Deckelkörper mit einem in das Durchgangsloch der Entkopplungshülse ragenden Deckelkragen und einem Deckelschaft angeordnet ist, wobei der Deckelkragen an der Innenwandung des Durchgangsloches anliegt und der Deckelschaft das Durchgangsloch mit radialem Abstand durchragt und an dem Motorhalter befestigt ist. Auf diese Art und Weise läßt sich ebenfalls die Dämpfungseigenschaft der Entkopplungshülse beeinflussen und die radiale Auslenkung begrenzen.

Eine sichere Halterung der Entkopplungshülse läßt sich in vorteilhafter Weise dadurch erzielen, dass an dem Motorhalter ein umlaufender Halterkragen ausgebildet ist, der an der ersten Anlagestelle U-förmig gestaltet und eine Haltenut bildend in das Durchgangsloch der Entkopplungshülse ragt und die Entkopplungshülse mit einem Bund in die Haltenut und mit einer Hülsennut an der zweiten Anlagestelle in ein Gehäuseloch des Gehäuses eingreift.

### Zeichnung

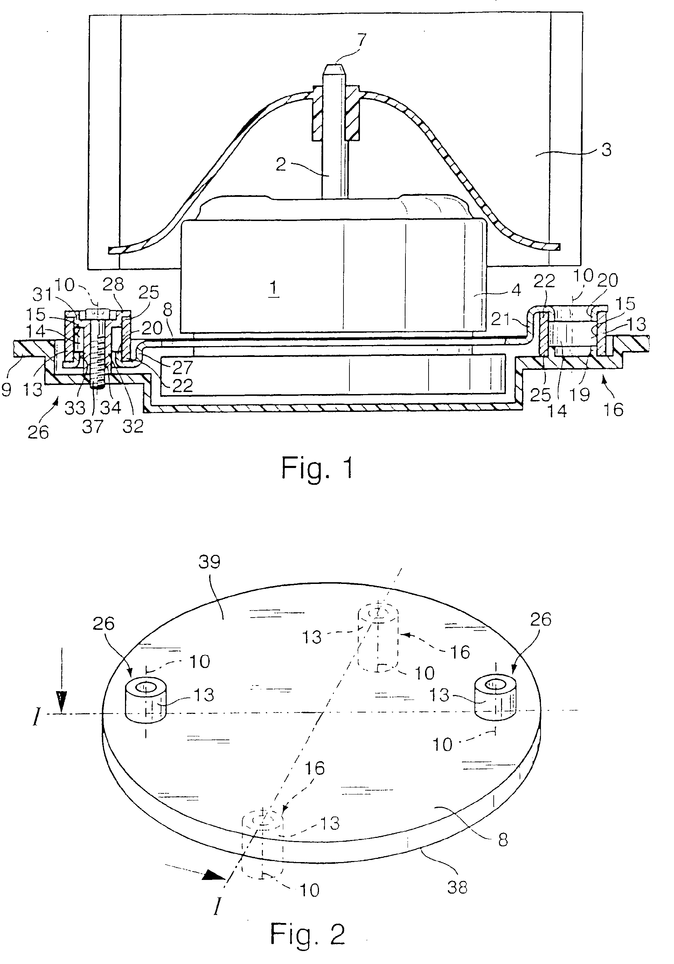

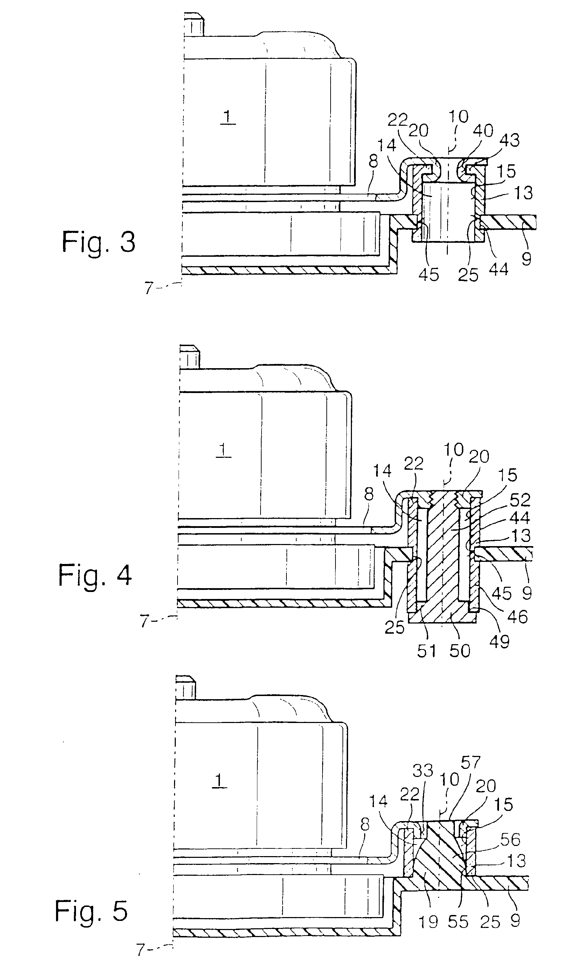

Ausführungsbeispiele der Erfindung sind in der Zeichnung vereinfacht dargestellt und in der nachfolgenden Beschreibung näher erläutert. Es zeigen Figur 1 ein erstes erfindungsgemäßes Ausführungsbeispiel einer Entkopplungsvorrichtung für einen Elektromotor gegenüber einem Gehäuse gemäß einem Schnitt entlang der Linie I-I in Figur 2, Figur 2 eine schematische Darstellung eines Motorhalters mit erfindungsgemäß entsprechend Figur 1 angeordneten Entkopplungshülsen, Figur 3 bis Figur 5 je ein zweites bis viertes Ausführungsbeispiel einer erfindungsgemäßen Entkopplungsvorrichtung für einen Elektromotor gegenüber einem Gehäuse in Teildarstellung.

### Beschreibung der Ausführungsbeispiele

In der Figur 1 ist mit 1 ein Elektromotor, beispielsweise ein elektronisch kommutierter Elektromotor in Außenläuferbauweise, dargestellt, der beispielsweise zum Antrieb eines Klimagebläses dient. Der Elektromotor 1, bei dem es sich hier um einen sogenannten Gebläsemotor handelt, weist eine Motorwelle 2 auf, auf der ein Gebläserad 3 sitzt. Der Elektromotor 1 hat ein Motorgehäuse 4, mit dem ein quer zu einer Motorlängsachse 7 und mit dem Motorgehäuse 4 verbundener scheibenförmiger Motorhalter 8 verbunden ist. Der Motorhalter 8 ist beispielsweise aus Metallblech geformt.

Der Elektromotor 1 ist beispielsweise Bestandteil einer Klimaanlage in einem Kraftfahrzeug, von der lediglich ein Gehäuse 9, das beispielsweise aus Kunststoff gefertigt ist, schematisch dargestellt ist. Zur Halterung des Elektromotors 1 und zur Dämpfung und Isolierung von Schwingungen des Elektromotors 1 gegenüber dem Gehäuse 9 sind Entkopplungsvorrichtungen vorgesehen, die je eine sich entlang einer Längsachse 10 erstreckende und ein Entkopplungselement bildende Entkopplungshülse 13 aus einem elastischen Material wie beispielsweise Gummi oder Kunststoff aufweisen. Jede Entkopplungshülse 13 hat ein Durchgangsloch 14 mit einer Innenwandung 15. In der Figur 1 ist rechts eine erste Entkopplungsstelle 16 gezeigt. An der ersten Entkopplungsstelle 16 weist das Gehäuse 9 einen kreisförmigen umlaufenden Gehäusekragen 19 und der Motorhalter 8 einen ringförmigen umlaufenden Halterkragen 20 auf. Gehäusekragen 19 und Halterkragen 20 sind aufeinander zugerichtet. Der Halterkragen 20 ist an einer von dem Gehäuse 9 weggebogenen ersten Kröpfung 21 des Motorhalters 8 ausgebildet. Jede Entkopplungshülse 13 hat eine erste Anlagestelle 22, an der sie an dem Motorhalter 8 anliegt, wobei der Halterkragen 20 in das Durchgangsloch 14 ragt und an dessen Innenwandung 15 anliegt. Die Entkopplungshülse 13 hat weiterhin eine zweite Anlagestelle 25, an der sie wenigstens mittelbar an dem Gehäuse 9 anliegt. An der ersten Entkopplungsstelle 16 liegt die zweite Anlagestelle der Entkopplungshülse 13 direkt am Gehäuse 9 derart an, daß der Gehäusekragen 19 in das Durchgangsloch 14 ragt und an dessen Innenwandung 15 anliegt. Der Motorhalter 8 stützt sich somit über die Entkopplungshülse 13 an dem Gehäuse 9 ab. Zwischen der ersten Anlagestelle 22 und der zweiten Anlagestelle 25 der Entkopplungshülse 13 kann sich die elastische Entkopplungshülse 13 in radialer Richtung frei bewegen, da weder in dem Durchgangsloch 14 noch außen die Bewegung in radialer Richtung begrenzende Mittel vorgesehen sind. Schwingungen des Elektromotors 1 können somit durch radiales Ausweichen der Entkopplungshülse 13 aufgefangen und gedämpft werden, so daß nahezu keine Körperschallübertragung zum Gehäuse 9 erfolgt. Dabei werden die Dämpfungseigenschaften der Entkopplungshülse beeinflußt durch die Materialwahl, die Länge, den Durchmesser und die Wandstärke der Entkopplungshülse 13.

Bei der in Figur 1 links dargestellten zweiten Entkopplungsstelle 26 ist der Halterkragen 20 an einer sich in Richtung zum Gehäuse 9 hin erstreckenden zweiten Kröpfung 27 des Motorhalters 8 ausgebildet und erstreckt sich in Richtung vom Gehäuse 9 weg an der ersten Anlagestelle 22 in das Durchgangsloch 14, an dessen Innenwandung 15 er anliegt. Ein Gehäusekragen ist an der zweiten Entkopplungsstelle 26 nicht vorgesehen, sondern die Entkopplungshülse 13 liegt mit ihrer zweiten Anlagestelle 25 mittelbar an dem Gehäuse 9 an, indem sich die Entkopplungshülse 13 von dem Gehäuse 9 weg erstreckt bis zu einem Halteelement 28. Das Halteelement 28 ist mit einem umlaufenden Elementenkragen 31 und einer Abstandshülse 32 ausgebildet. Der Elementenkragen 31 ragt in das Durchgangsloch 14 der Entkopplungshülse 13 und liegt an dessen Innenwandung 15 an. Die Abstandshülse 32 durchragt das Durchgangsloch 14 der Entkopplungshülse 13 sowie ein Kragenloch 33 des Halterkragens 20 jeweils mit radialem Abstand und liegt an dem Gehäuse 9 an. Entlang der Hülsenlängsachse 10 erstreckt sich ein Elementenloch 34 durch die Abstandshülse 32, durch das eine Schraube 37 gesteckt und mit dem Gehäuse 9 verschraubt ist. Da zwischen der ersten Anlagestelle 22 und der zweiten Anlagestelle 25 die Entkopplungshülse 13 einen radialen Abstand gegenüber der Abstandshülse 32 hat und ebenfalls zwischen der Abstandshülse 32 und dem Kragenloch 33 ein radialer Abstand vorgesehen ist, können Schwingungen des Elektromotors 1 in radialer Richtung durch radiales Ausweichen der Entkopplungshülse 13 aufgefangen und gedämpft werden. Wird die Amplitude der radialen Schwingungen des Motorhalters 8 so groß, daß der Halterkragen 20 zum Anliegen an der Abstandshülse 32 gelangt, so wirkt die Abstandshülse 32 als Anschlag und begrenzt die Schwingungsamplitude, um eine Überlastung der Entkopplungshülse 13 zu vermeiden.

In der Figur 2 ist eine vorteilhafte Anordnung der in der Figur 1 dargestellten ersten Entkopplungsstelle 16 und der zweiten Entkopplungsstelle 26 dargestellt, wobei die Figur 1 einen Schnitt entlang der Linie I-I in Figur 2 zeigt. Die in der Figur 1 dargestellte erste Entkopplungsstelle 16 liegt also in Wirklichkeit um 90° geschwenkt. Bei der in der Figur 2 dargestellten vorteilhaften Anordnung sind an dem schematisch dargestellten Motorhalter 8 je ein Paar erster Entkopplungsstellen 16 und ein Paar zweiter Entkopplungsstellen 26 dargestellt, wobei in Umfangsrichtung des Motorhalters 8 gesehen die ersten Entkopplungsstellen 16 sich von einer Unterfläche 38 des Motorhalters 8 in Richtung eines Gehäuses 9 erstrecken und um 180° zueinander versetzt sind, während die zweiten Entkopplungsstellen 26 gegenüber den ersten Entkopplungsstellen 16 um 90° versetzt sind und gegenüber sich selbst um 180° und auf einer Oberfläche 39 des Motorhalters 8 angeordnet sind. Es ist somit wenigstens immer ein Paar erste Kopplungsstellen 16 und wenigstens ein Paar zweite Kopplungsstellen 26 an dem Motorhalter 8 vorgesehen, wobei erste Kopplungsstellen 16 und zweite Kopplungsstellen 26 in Umfangsrichtung des Motorhalters 8 gleiche Abstände zueinander haben und sich gegenseitig abwechselnd angeordnet sind. Eine derartige Anordnung ist deshalb vorteilhaft, weil beim Auftreten einer Zugbeanspruchung, beispielsweise der in Figur 2 links dargestellten zweiten Entkopplungsstelle 26, wird diese Zugbeanspruchung über den Motorhalter 8 in ein Moment umgewandelt, das zu Druckkräften an den ersten Entkopplungsstellen 16 und der rechten zweiten Entkopplungsstelle 26 führt. Die Entkopplungshülsen 13 werden somit ausschließlich auf Druck und Schub beansprucht, so daß eine direkte axiale Befestigung der Entkopplungshülsen 13 an dem Motorhalter 8 und dem Gehäuse 9 bzw. dem Halteelement 28 mittels Kleben oder Formschluß nicht erforderlich ist, wodurch sich die Schüttelfestigkeit verbessert. Die beschriebene Schwingungsentkopplung setzt nicht die Verwendung von Entkopplungshülsen voraus. Vielmehr können auch als Vollkörper ausgebildete Entkopplungselemente Verwendung finden, die aus elastischem Material bestehen und beispielsweise formschlüssig an dem Motorhalter 8 und dem Gehäuse 9 gehalten werden.

In den nachfolgenden Figuren 3 bis 5 sind die gleichen und gleichwirkenden Teile durch die gleichen Bezugszeichen gekennzeichnet wie in den Figuren 1 und 2, wobei lediglich eine Entkopplungsstelle dargestellt ist von den mindestens drei in Umfangsrichtung des Motorhalters 8 mit gleichem Abstand zueinander vorgesehenen Entkopplungsstellen. In der Figur 3 ist der Motorhalter 8 mit einem umlaufenden Halterkragen 20 ausgebildet, der an der ersten Anlegestelle 22 U-förmig gestaltet und eine Haltenut 40 bildend in das Durchgangsloch 14 der Entkopplungshülse 13 ragt. Die Entkopplungshülse 13 hat an der ersten Anlegestelle 22 einen radial nach innen gerichteten Bund 43, der in die Haltenut 40 eingreift und darin die Entkopplungshülse 13 fixiert. An der zweiten Anlagestelle 25 hat die Entkopplungshülse 13 eine Hülsennut 44, die in ein Gehäuseloch 45 des Gehäuses 9 einrastend eingreift, so daß die Entkopplungshülse 13 in dem Gehäuseloch 45 fixiert ist. Zwischen der ersten Anlagestelle 22 und der zweiten Anlagestelle 25 kann somit die Entkopplungshülse 13 radial ausgelenkt werden und dadurch Motorschwingungen dämpfen bzw. isolieren.

Bei dem Ausführungsbeispiel nach Figur 4 besitzt die Entkopplungshülse 13 ausgehend von der zweiten Anlagestelle 25 einen über das Gehäuse 9 hinausgehenden Abstimmungsabschnitt 46, auf dessen Ende 49 ein Deckelkörper 50 sitzt. Der Deckelkörper 50 ragt mit einem an der Innenwandung 15 des Endes 49 anliegenden Deckelkragen 51 und einem sich daran anschließenden Deckelschaft 52 in das Durchgangsloch 14 hinein, wobei zwischen dem Deckelschaft 52 und der Innenwandung 15 ein radialer Abstand vorliegt und der Deckelschaft 52 in dem Halterkragen 20 befestigt ist, beispielsweise verschraubt. Bei einer Schwingungsbewegung des Elektromotors 1 kann die Entkopplungshülse 13 zur Schwingungsdämpfung radial ausweichen, wobei bei einer maximal zulässigen Schwingungsbewegung der Deckelschaft 52 als Anschlag dient und an der Innenwandung 15 und damit mittelbar an dem Gehäuseloch 45 zur Anlage kommt, und damit eine Beschädigung der Entkopplungshülse 13 vermeidet. Die Dämpfungseigenschaften der Entkopplungshülse 13 sind dabei nicht nur durch die axiale Länge zwischen der ersten Anlagestelle 22 und der zweiten Anlagestelle 25, sondern auch durch die axiale Länge des Abstimmungsabschnittes 46 entlang der Hülsenlängsachse 10 beeinflußbar. An der ersten Anlagestelle 22 kann die Entkopplungshülse 13 mit dem Halterkragen 20 und an dem Ende 49 mit dem Deckelkragen 51 verklebt sein.

Bei dem Ausführungsbeispiel nach Figur 5 sitzt die erste Anlagestelle 22 der Entkopplungshülse 13 auf dem Halterkragen 20 und die zweite Anlagestelle 25 auf dem Gehäusekragen 19, der mit einem ersten Kragenabschnitt 55 an der Innenwandung 15 des Durchgangsloches 14 anliegt und einen sich daran anschließenden verjüngenden zweiten Kragenabschnitt 56 hat, der beispielsweise gewölbt mit radialem Abstand zur Innenwandung 15 verläuft. An den zweiten Kragenabschnitt 56 schließt sich ein dritter zylindrischer Kragenabschnitt 57 des Gehäusekragens 19 an, der mit radialem Abstand in das Kragenloch 33 des Halterkragens 20 ragt. Die Entkopplungshülse 13 ist an ihrer ersten Anlagestelle 22 und an ihrer zweiten Anlagestelle 25 beispielsweise mit dem Gehäusekragen 19 bzw, dem Halterkragen 20 verklebt. Bei einer radialen Auslenkung der Entkopplungshülse 13 zur Schwingungsdämpfung des Elektromotors 1 stützt sich zunächst die Innenwandung 15 der Entkopplungshülse 13 mehr oder weniger auf dem sich verjüngenden zweiten Kragenabschnitt 56 des Gehäusekragens 19 ab, wodurch die Federeigenschaften der Entkopplungshülse 13 härter werden, bis zur Begrenzung der maximal zulässigen Schwingungsbewegung der dritte Kragenabschnitt 57 an der Wandung des Kragenlochs 33 anliegt.

Bei den Ausführungsbeispielen nach den Figuren 3 bis 5 können jeweils wenigstens zwei der dargestellten Entkopplungsstellen zwischen Motorhalter 8 und Gehäuse 9 vorgesehen sein, es können jedoch auch sich paarweise abwechselnde Entkopplungsstellen gemäß dem Ausführungsbeispiel nach den Figuren 1 und 2 Verwendung finden.

## Patentansprüche

1. Entkopplungsvorrichtung für einen Elektromotor (1) gegenüber einem Gehäuse (9), mit einem mit einem Motorgehäuse (4) des Elektromotors (1) verbundenen Motorhalter (8), welcher eine Unterfläche (38) und eine Oberfläche (39) aufweist, und wenigstens zwei aus elastischem Material ausgebildeten Entkopplungselementen (13), die eine erste Anlagestelle (22), an der sie wenigstens mittelbar an dem Motorhalter (8) anliegen, sowie eine zweite Anlagestelle (25) haben, an der sie wenigstens mittelbar an dem Gehäuse (9) anliegen, wobei an einer ersten Entkopplungsstelle (16) ein Entkopplungselement (13) zwischen der Unterfläche (38) des Motorhalters (8) und dem Gehäuse (9) angeordnet ist und an einer zweiten Entkopplungsstelle (26) ein Entkopplungselement (13) zwischen der Oberfläche (39) des Motorhalters (8) und dem Gehäuse (9) angeordnet ist, **dadurch gekennzeichnet, dass** in Umfangsrichtung des Motorhalters (8) wenigstens ein Paar erste Entkopplungsstellen (16) und wenigstens ein Paar zweite Entkopplungsstellen (26) vorgesehen sind, wobei sich erste Entkopplungsstellen (16) und zweite Entkopplungsstellen (26) in Umfangsrichtung abwechseln und gleiche Abstände zueinander haben.

2. Entkopplungsvorrichtung nach Anspruch 1, **dadurch gekennzeichnet, dass** das Entkopplungselement (13) als Entkopplungshülse (13) mit einem Durchgangsloch (14) und einer Innenwandung (15) ausgebildet ist, und zwischen der ersten (22) und der zweiten Anlagestelle (25) jede Entkopplungshülse (13) gegenüber einer Hülsenlängsachse (10) radial auslenkbar gehalten ist.

3. Entkopplungsvorrichtung nach Anspruch 2, **dadurch gekennzeichnet, dass** bei der ersten Entkopplungsstelle (16) an dem Motorhalter (8) ein umlaufender Halterkragen (20) ausgebildet ist, der an der ersten Anlagestelle (22) in das Durchgangsloch (14) der Entkopplungshülse (13) ragt sowie an dessen Innenwandung (15) anliegt und an dem Gehäuse (9) ein umlaufender Gehäusekragen (19) ausgebildet ist, der an der zweiten Anlagestelle (25) in das Durchgangsloch (14) der Entkopplungshülse (13) ragt sowie an dessen Innenwandung (15) anliegt.

4. Entkopplungsvorrichtung nach zumindest einem der Ansprüche 2 oder 3, **dadurch gekennzeichnet,** das bei der zweiten Entkopplungsstelle (26) an dem Motorhalters (8) ein umlaufender Halterkragen (20) ausgebildet ist, der an der ersten Anlagestelle (22) in das Durchgangsloch (14) der Entkopplungshülse (13) ragt sowie an dessen Innenwandung (15) anliegt und ein Halteelement (28) vorgesehen ist, an dem eine Abstandshülse (32) und ein umlaufender Elementenkragen (31) ausgebildet sind, der an der zweiten Anlagestelle (25) in das Durchgangsloch (14) der Entkopplungshülse (13) ragt sowie an dessen Innenwandung (15) anliegt und die Abstandshülse (32) das Durchgangsloch (14) und den Halterkragen (20) mit radialem Abstand durchragt und an dem Gehäuse (9) anliegend mittels einer Schraubenverbindung (37) gehalten wird.

5. Entkopplungsvorrichtung nach Anspruch 2, **dadurch gekennzeichnet, dass** an dem Motorhalter (8) ein umlaufender Halterkragen (20) ausgebildet ist, der an der ersten Anlagestelle (22) in das Durchgangsloch (14) der Entkopplungshülse (13) ragt sowie an dessen Innenwandung (15) anliegt und an dem Gehäuse (9) ein umlaufender Gehäusekragen (19) ausgebildet ist, der an der zweiten Anlagestelle (25) in das Durchgangsloch (14) der Entkopplungshülse (13) ragt und ausgehend von dem Motorhalters (8) einen ersten an der Innenwandung (15) des Durchgangslochs (14) anliegenden Kragenabschnitt (55), einen zweiten sich verjüngenden Kragenabschnitt (56) und einen dritten zylindrischen Kragenabschnitt (57) hat, der mit radialem Abstand in ein Kragenloch (33) des Halterkragens (20) ragt.

6. Entkopplungsvorrichtung nach Anspruch 2, **dadurch gekennzeichnet, dass** an dem Motorhalter (8) ein umlaufender Halterkragen (20) ausgebildet ist, der an der ersten Anlagestelle (22) in das Durchgangsloch (14) der Entkopplungshülse (13) ragt sowie an dessen Innenwandung (15) anliegt und das Gehäuse (9) ein Gehäuseloch (45) hat, in das die Entkopplungshülse (13) an der zweiten Anlagestelle (25) mit einer Hülsennut (44) eingreift.

7. Entkopplungsvorrichtung nach Anspruch 6, **dadurch gekennzeichnet, dass** die Entkopplungshülse (13) anschließend an die zweite Anlagestelle (25) einen Abstimmungsabschnitt (46) hat, auf dessen Ende (49) ein Deckelkörper (50) mit einem in das Durchgangsloch (14) der Entkopplungshülse (13) ragenden Deckelkragen (51) und einem Deckeischaft (52) angeordnet ist, wobei der Deckelkragen (51) an der Innenwandung (15) des Durchgangslochs (14) anliegt und der Deckelschaft (52) das Durchgangsloch (14) mit radialem Abstand durchragt und an dem Motorhalter (8) befestigt ist.

8. Entkopplungsvorrichtung nach Anspruch 2, **dadurch gekennzeichnet, dass** an dem Motorhalter (8) ein umlaufender Halterkragen (20) ausgebildet ist, der an der ersten Anlagestelle (22) U-förmig gestaltet und eine Haltenut (40) bildend in das Durchgangsloch (14) der Entkopplungshülse (13) ragt und die Entkopplungshülse (13) mit einem Bund (43) in die Haltenut (40) und mit einer Hülsennut (44) an der zweiten Anlagestelle (25) in ein Gehäuseloch (45) des Gehäuses (9) eingreift.

## Claims

1. Apparatus for decoupling an electric motor (1) from a housing (9), comprising a motor holder (8) which is connected to a motor housing (4) of the electric motor (1) and has a lower face (38) and an upper face (39), and at least two decoupling elements (13) which are formed from elastic material and have a first abutment point (22) at which they rest at least indirectly against the motor holder (8), and a second abutment point (25) at which they rest at least indirectly against the housing (9), with a decoupling element (13) being arranged between the lower face (38) of the motor holder (8) and the housing (9) at a first decoupling point (16), and a decoupling element (13) being arranged between the upper face (39) of the motor holder (8) and the housing (9) at a second decoupling point (26), **characterized in that** at least one pair of first decoupling points (16) and at least one pair of second decoupling points (26) are provided in the circumferential direction of the motor holder (8), with first decoupling points (16) and second decoupling points (26) alternating in the circumferential direction and being at equal distances from one another.

2. Decoupling apparatus according to Claim 1, **characterized in that** the decoupling element (13) is in the form of a decoupling sleeve (13) with a through-hole (14) and an inner wall (15), and each decoupling sleeve (13) is held between the first abutment point (22) and the second abutment point (25) such that it can be radially deflected in relation to a sleeve longitudinal axis (10).

3. Decoupling apparatus according to Claim 2, **characterized in that**, at the first decoupling point (16), a circumferential holder collar (20) is formed on the motor holder (8), the said holder collar protruding into the through-hole (14) in the decoupling sleeve (13) and resting against its inner wall (15) at the first abutment point (22), and a circumferential housing collar (19) is formed on the housing (9), the said housing collar protruding into the through-hole (14) in the decoupling sleeve (13) and resting against its inner wall (15) at the second abutment point (25).

4. Decoupling apparatus according to at least one of Claims 2 and 3, **characterized in that** a circumferential holder collar (20) is formed on the motor holder (8) at the second decoupling point (26), the said holder collar protruding into the through-hole (14) in the decoupling sleeve (13) and resting against its inner wall (15) at the first abutment point (22), and a holding element (28) is provided on which a spacer sleeve (32) and a circumferential element collar (31) are formed, the said element collar protruding into the through-hole (14) in the decoupling sleeve (13) and resting against its inner wall (15) at the second abutment point (25), and the spacer sleeve (32) protruding through the through-hole (14) and the holder collar (20) at a radial distance and being held by means of a screw connection (37) so as to rest against the housing (9).

5. Decoupling apparatus according to Claim 2, **characterized in that** a circumferential holder collar (20) is formed on the motor holder (8), the said holder collar protruding into the through-hole (14) in the decoupling sleeve (13) and resting against its inner wall (15) at the first abutment point (22), and a circumferential housing collar (19) being formed on the housing (9), the said housing collar protruding into the through-hole (14) in the decoupling sleeve (13) at the second abutment point (25) and, starting from the motor holder (8), having a first collar section (55) which rests against the inner wall (15) of the through-hole (14), a second tapering collar section (56) and a third cylindrical collar section (57) which protrudes into a collar hole (33) in the holder collar (20) at a radial distance.

6. Decoupling apparatus according to Claim 2, **characterized in that** a circumferential holder collar (20) is formed on the motor holder (8), the said holder collar protruding into the through-hole (14) in the decoupling sleeve (13) and resting against its inner wall (15) at the first abutment point (22), and the housing (9) has a housing hole (45) in which the decoupling sleeve (13) engages by way of a sleeve groove (44) at the second abutment point (25).

7. Decoupling apparatus according to Claim 6, **characterized in that** the decoupling sleeve (13) has an adjustment section (46) adjoining the second abutment point (25), a cover body (50) with a cover collar (51), which protrudes into the through-hole (14) in the decoupling sleeve (13), and a cover shaft (52) being arranged at the end (49) of the said adjustment section, with the cover collar (51) resting against the inner wall (15) of the through-hole (14) and the cover shaft (52) protruding through the through-hole (14) at a radial distance and being fixed to the motor holder (8).

8. Decoupling apparatus according to Claim 2, **characterized in that** a circumferential holder collar (20) is formed on the motor holder (8), the said holder collar being of U-shaped configuration at the first abutment point (22) and protruding into the through-hole (14) in the decoupling sleeve (13) so as to form a holding groove (40), and the decoupling sleeve (13) engaging in the holding groove (40) by way of a flange (43) and engaging in a housing hole (45) in the housing (9) by way of a sleeve groove (44) at the second abutment point (25).

## Revendications

1. Dispositif de découplage d'un moteur électrique (1) par rapport à un boîtier (9) comprenant un support de moteur (8) relié au boîtier (4) du moteur électrique (1), ce support ayant une surface inférieure (38) et une surface supérieure (39) et au moins deux éléments de découplage (13) en matière élastique, ayant une première position d'appui (24) par laquelle ils s'appuient au moins indirectement contre le support de moteur (8) et une seconde position d'appui (25) par laquelle ils s'appuient au moins indirectement contre le boîtier (9),
dans la première position de découplage (16), un élément de découplage (13) est prévu entre la surface inférieure (38) du support de moteur (8) et le boîtier (9) et dans la seconde position de découplage (26), un élément de découplage (13) est prévu entre la surface supérieure (39) du support de moteur (8) et le boîtier (9),
**caractérisé en ce que**
dans la direction périphérique du support de moteur (8) il est prévu au moins une paire de secondes positions de découplage (26), les premières positions de découplage (16) et les secondes positions de découplage (26) alternant de façon équidistante dans la direction périphérique.

2. Dispositif de découplage selon la revendication 1,
**caractérisé en ce que**
l'élément de découplage (13) est réalisé sous la forme d'un manchon de découplage (13) muni d'un orifice traversant (14) et ayant une paroi intérieure (15) et entre le premier point d'appui (22) et le second point d'appui (25) chaque manchon de découplage (13) est tenu de façon à se déboîter radialement par rapport à l'axe longitudinal de manchon (10).

3. Dispositif de découplage selon la revendication 1,
**caractérisé en ce que**
pour la première position de découplage (16), le support de moteur (8) comporte une collerette de fixation (20), périphérique, venant en saillie dans l'orifice traversant (14) du manchon de découplage (13) lorsqu'on est dans la première position d'appui (22) et contre la paroi intérieure (15) du manchon en étant réalisée comme collerette de boîtier tournant autour du boîtier (9), et dans la seconde position d'appui (25) la collerette pénètre dans l'orifice traversant (14) du manchon de découplage (13) et s'applique contre sa paroi intérieure (15).

4. Dispositif de découplage selon au moins l'une des revendications 2 ou 3,
**caractérisé en ce que**
pour la seconde position de découplage (26), une collerette de fixation (20) périphérique est réalisée sur le support de moteur (8), cette collerette pénétrant dans un premier point d'appui (22) dans l'orifice traversant (14) du manchon de découplage (13) et s'appuyant contre sa paroi intérieure (15) et il est prévu un élément de fixation (28) muni d'un manchon d'écartement (32) et d'une collerette élémentaire (31) périphérique, pénétrant pour la seconde position d'appui (25) dans l'orifice traversant (14) du manchon de découplage (13) et s'appliquant contre sa paroi intérieure (15), le manchon d'écartement (32) passant dans l'orifice traversant (14) et la collerette de fixation (20) avec une distance axiale en étant tenu appliqué contre le boîtier (9) par une liaison à vis (37).

5. Dispositif de découplage selon la revendication 2,
**caractérisé en ce que**
le support de moteur (8) comporte une collerette de fixation (20), périphérique, qui, au niveau de la première position d'appui (22), pénètre dans l'orifice traversant (14) du manchon de découplage (13) et s'applique contre sa paroi intérieure (15) et le boîtier (9) a une collerette périphérique (19) et qui, pour la seconde position d'appui (25), pénètre dans l'orifice traversant (14) du manchon de découplage (13) et partant du support de moteur (8) pénètre dans un premier segment de collerette (55) appliqué contre la paroi intérieure (15) de l'orifice traversant (14), un second segment de collerette (56) allant en diminuant et un troisième segment de collerette (57), cylindrique, qui pénètre avec une distance radiale dans l'orifice de collerette (33) de la collerette de fixation (20).

6. Dispositif de découplage selon la revendication 2,
**caractérisé par**
une collerette de fixation (20), périphérique, réalisée sur le support de moteur (8), collerette qui dans la première position d'appui (22) pénètre dans l'orifice traversant (14) du manchon de découplage (13) et s'applique contre sa paroi intérieure (15) et le boîtier (9) a un orifice de boîtier (45) dans lequel pénètre le manchon de découplage (13) dans sa seconde position d'appui (25) avec une rainure de manchon (44).

7. Dispositif de découplage selon la revendication 6,
**caractérisé en ce que**
le manchon de découplage (13) présente de façon adjacente à la seconde position d'appui (25), un segment de mise en accord (46) dont l'extrémité (49) comporte un couvercle (50) avec une collerette de couvercle (51) pénétrant dans l'orifice traversant (14) du manchon de découplage (13) et une tige de couvercle (52), la collerette de couverture (51) étant appliquée contre la paroi intérieure (15) de l'orifice traversant (14), la tige (52) du couvercle traversant l'orifice traversant (14) en laissant un intervalle radial et en étant fixée au support de montage (8).

8. Dispositif de découplage selon la revendication 2,
**caractérisé en ce qu'**
une collerette de fixation (20), périphérique est réalisée sur le support de moteur (9), collerette de forme en U au niveau de sa première position d'appui (22) et formant une rainure de fixation (40) pour pénétrer dans l'orifice traversant (14) du manchon de découplage (13), qui pénétre avec une collerette (43) dans la rainure de fixation (40) et avec une rainure de fixation (44) dans un orifice (45) du boîtier (9)pour la seconde position d'appui (25).
